# EUROPÄISCHE PATENTSCHRIFT

(11) **EP 0 952 025 B1**
(45) Veröffentlichungstag und Bekanntmachung des Hinweises auf die Patenterteilung: **08.09.2004**
(21) Anmeldenummer: 99101706.2
(22) Anmeldetag: 09.02.1999
(51) Int. Cl.: B60K 13/02

(54) **Abschottungskörper für die Verbrennungsluft eines Verbrennungsmotors**
Partition body for the combustion air of an internal combustion enginge
Corps de cloisonnement pour l'air comburant pour moteur à combustion interne

(30) Priorität: 23.04.1998 DE 19818237
(43) Veröffentlichungstag der Anmeldung: 27.10.1999
(73) Patentinhaber: Volkswagen Aktiengesellschaft, 38436 Wolfsburg (DE)
(72) Erfinder: Niedenführ, Sven, Dipl.-Ing., 38554 Isenbüttel (DE); Höfermann, Ulrich, Dipl.-Ing., 38470 Parsau (DE)

(56) Entgegenhaltungen:
- EP-A- 0 065 183
- EP-A- 0 535 406
- DE-A- 4 419 219
- FR-A- 2 568 829
- GB-A- 2 110 174
- US-A- 4 878 555
- US-A- 5 042 603

## Beschreibung

Die Erfindung betrifft eine Fahrzeugkarosserie mit einem Kotflügel, der mit einem Innen- und einem Außenkotflügel einen Karosseriehohlraum begrenzt, in dem ein Abschottungskörper für die Verbrennungsluft eines Verbrennungsmotors angeordnet ist mit einem von der Schottwandung gebildeten Gehäuse, das einen Ansaugraum für im wesentlichen nicht erwärmte und vom Fahrtwind unbeeinflusste Umgebungsluft umschließt, dem im Gehäuse eine Ansaugöffnung für die Luft zugeordnet ist und der über eine Rohtuftleitung mit einer Gemischaufbereitung verbunden ist.

Eine derartige Konstruktion ist aus der gattungsbildenden DE 44 19 219 A1 bekannt. Dort ist als Abschottungskörper ein geschäumtes Kunststoffformteil an der Innenseite des äußeren Kotflügelbleches befestigt, so dass es in dem Karosseriehohlraum zwischen dem Innen- und dem Außenkotflügel angeordnet ist. In das Gehäuse des Abschottungskörpers mündet die Rohluftleitung, die die angesaugte Umgebungsluft der Gemischaufbereitung zuführt. Die Zufuhr der Umgebungsluft erfolgt hier über seitliche Öffnungen in der Wandung des Außenkotflügels. Die seitlichen Öffnungen werden dabei zweckmäßigerweise so positioniert, dass die Luft aus einem Totwasserbereich angesaugt wird, so dass die Geschwindigkeit der um das Fahrzeug strömenden Luft nur geringen Einfluss auf die Druckverhältnisse im Ansaugraum des Abschottungskörpers hat.

Obwohl mit der bekannten Vorrichtung Verbrennungsluft in definierten Zuständen ansaugbar ist, hat sie doch den Nachteil, dass durch die seitlichen Öffnungen zum einen durch Druckschwankungen der meist turbulenten Karosserieumströmung und zum anderen durch Windeinflüsse eine unerwünschte Druckschwankung im Ansaugraum vorliegen kann. Ferner hat diese Vorrichtung den Nachteil, dass durch die seitlichen Öffnungen Schmutzpartikel und Spritzwasser eindringen können und so ungewollt zusammen mit der Verbrennungsluft angesaugt werden und in den Brennraum des Verbrennungsmotors geraten können. Schließlich besteht die Gefahr, dass die seitlichen Öffnungen durch angesaugte Blätter oder sonstige auf der Straße umherfliegende, blattartige Materialien zusetzen, indem diese durch den zum Ansaugen der Verbrennungsluft notwendigen Unterdruck angesaugt werden und sich flach auf die jeweiligen Öffnungen legen.

Während dieser Stand der Technik in Übereinstimmung mit der Erfindung einen ohnehin im Kotflügel vorhandenen Karosseriehohlraum zur Unterbringung des Abschottungskörpers ausnutzt, sehen andere bekannte Konstruktionen praktisch über die gesamte Fahrzeugbreite und bevorzugt bugnah verlaufende Einrichtungen vor:

In der US-A 5,042,603 wird die Luft von seitlich auf die Motorhaube aufgesetzten Luftfangvorrichtungen über senkrechte Kanäle in einen Querkanal geleitet und von diesem mittig abgeleitet zur Maschine. Insbesondere durch diese Umlenkungen soll mitgeführtes Wasser von der Luft getrennt werden. Eine derartige ― komplizierte - Einrichtung lässt sich an einem Kotflügel nicht einsetzen.

Die Vorrichtung nach der FR-A 2 568 829 verwendet als Abschattungskörper einen stoßfängerartigen hohlen Querträger mit rückwärtsgerichteten Ansaugöffnungen, dem an einem Ende mittels eines Schlauchs die Luft entnommen und zur Maschine geleitet wird. Da die Ansaugöffnungen bodennah unmittelbar ins Freie münden, besteht die Gefahr, dass Schmutz- und Wasserpartikel mitgerissen werden. Das gilt auch dann, wenn seitlich ein mit einer weiten Durchtrittsöffnung für den Schlauch versehener, einen Karosseriebestandteil bildender Schirm vorhanden ist.

In dem Kraftfahrzeug-Vorderbau nach der EP-A-0 535 406 bilden ein Stoßfänger und ein diesen rückseitig teilweise übergreifendes U-förmiges Formteil einen Luftführungskanal für die Ansaugluft einer Brennkraftmaschine. Das Formteil ist auf seiner Rückseite mit Lufteintrittsöffnungen versehen, so dass die Fahrtluftströmung Umlenkungen erfährt, die zur Luftreinigung beitragen. Da die Lufteintrittsöffnungen unmittelbar vor einem Luftansauggebläse liegen, dürfte die Luftzufuhr zu ihnen recht beschränkt sein. Diese Konstruktion ist eindeutig auf den Stoßfängerbereich abgestellt.

Der Ansaugluftreiniger nach der GB-A-2 110 174 schließlich enthält einen das Gehäuse bildenden, hinter einem Kühlergitter verlaufenden Querträger, von dessen unterer Wand ein Schlauch zum Luftfilter abgeht, während eine vordere Wand eine Öffnung aufweist, die mit Spiel eine Frontlampe umgibt; dieses Spiel dient als Lufteintrittsspalt. Als Stand der Technik ist dort ferner eine Konstruktion gezeigt mit einem U-förmig gekrümmten, an der Unterseite des Fahrzeugbodens nach unten weisend gehaltenen Schirm, in den nach oben weisend ein Schenkel eines L-ähnlichen Rohrstutzens an einem Luftfilter hineinragt. Der nach unten weisenden, offenen Randpartien des Schirm steht unter Bildung eines Lufteintrittsspalts ein flacher Abweiser gegenüber. Da alle genannten Teile zusätzlich vorhanden sind, besteht kein Zusammenhang mit der gattungsgemäßen Ausnutzung eines vorhanden Karosseriehohlraumes in einem Stoßfänger.

Aufgabe der Erfindung ist die Schaffung einer gattungsgemäßen Karosserie, die trotz Ausnutzung eines vorhandenen Karosseriehohlraumes das Ansaugen fremdstofffreier Verbrennungsluft bei kostengünstiger Großserienfertigung ermöglicht.

Die erfindungsgemäße Lösung dieser Aufgabe besteht in einer gattungsgemäßen Karosserie mit den kennzeichnenden Merkmalen des Hauptanspruchs, vorteilhafte Ausbildungen der Erfindung beschreiben die Unteransprüche.

Die Lage und die Anzahl der Öffnungen zum Ansaugen der Verbrennungsluft kann je nach Bedarf gewählt werden. Bei Motoren mit großem Luftbedarf, beispielsweise bei turboaufgeladenen Dieselmotoren, können entsprechend viele Öffnungen vorgesehen werden, so dass ein großes Luftvolumen in den Ansaugraum förderbar ist. Die Öffnungen sollten so angeordnet sein, dass eventuell in den Karosseriehohlraum eindringendes Spritzwasser oder sonstige Fremdkörper, wie beispielsweise Schmutz- oder Staubpartikel, nicht oder in nur vernachlässigbarer Menge angesaugt werden können. Zum weiteren Schutz vor dem Eindringen von Fremdkörpern kann die Öffnung zusätzlich mit einer Labyrinth-Dichtung versehen sein.

Zum Ansaugen der Verbrennungsluft in den Karosseriehohlraum ist dessen Wandung so ausgestaltet, dass die angesaugte Verbrennungsluft durch Umgebungsluft ersetzbar ist. Bei der Anordnung des Abschottungskörpers im Innenraum eines Kotflügels, also in dem Raum eines Pkw, der üblicherweise durch den Innen-, den Außenkotflügel und die Radhausschale begrenzt ist, kann die Verbrennungsluft zum Beispiel durch Spalte und Fugen zwischen den einzelnen Bauteilen in den Karosseriehohlraum eindringen. Da dieser Bereich des Motorraums vom Verbrennungsmotor ausreichend weit entfernt ist, ist die angesaugte Luft wenn überhaupt nur unwesentlich erwärmt, selbst wenn sich der Motor im Bereich der maximalen Betriebstemperatur befindet. Das Ansaugen nicht erwärmter Verbrennungsluft ist insbesondere deshalb wichtig, weil sich durch unterschiedlich temperierte Luftströme der Füllgrad des Motors aufgrund der unterschiedlichen Volumina der Luft bei verschiedenen Temperaturen ungewollt ändern würde.

Bereits die im Motorraum befindliche Umgebungsluft, die durch die Spalte in den Karosseriehohlraum eindringt, ist relativ zur Fahrzeugumströmung verhältnismäßig beruhigt. Nachdem diese jedoch durch die Spalten, die einen verhältnismäßig hohen Strömungswiderstand bilden, geströmt ist, ist ein Einfluss der Fahrzeuggeschwindigkeit auf den Innendruck im Karosseriehohlraum im wesentlichen nicht mehr vorhanden. Hierdurch herrscht bei allen Fahrzeuggeschwindigkeiten im Ansaugraum ein einheitliches Druckverhältnis.

Bei einer bevorzugten Ausgestaltung ist der Abschottungskörper aus einem geschäumten Kunststoff, beispielsweise einem Polyurethanschaum, einem Polypropylenschaum oder ähnlichem hergestellt. Ein derartiger Abschottungskörper lässt sich einfach über kostengünstige Formen herstellen und so gestalten, dass seine Wandung jedem an der Wandung des Innen- bzw. Außenkotflügels anliegt. Durch die günstigen akustischen Eigenschaften eines geschäumten Materials wird zusätzlich eventuell durch die Rohluftleitung dringendes Motorengeräusch wirksam gedämpft.

Zum Schutz vor Beschädigungen kann die Außenfläche des Abschottungskörpers im Falle eines geschäumten Kunststoffes zusätzlich verstärkt sein, beispielsweise indem bei der Herstellung des Abschottungskörpers die Spritzgußformen entsprechend gekühlt werden, so daß ein sogenannter Integralschaum mit an der Oberfläche deutlich erhöhtem Raumgewicht entsteht. Bevorzugt wird zur Herstellung eines Abschottungskörpers aus einem geschäumten Kunststoff dieser derart aufgeschäumt, daß sich ein Raumgewicht von 20 - 30 g/l einstellt.

Für kleinere Serien kann neben einem Reaktionsschäumverfahren auch ein Formbildungsverfahren aus Partikelschaum (Styroporverfahren) gewählt werden. Hierbei werden vorgeschäumte Partikel, beispielsweise aus Polystyrol, nach dem Trocknen und Lüften in die Form für den Abschottungskörper eingegeben und durch Bedampfen mit Wasserdampf aufgeschäumt und verschweißt. Für kleinere Stückzahlen kann der Abschottungskörper auch im Sinterverfahren, insbesondere durch Rotations- oder Schüttsinterverfahren, hergestellt werden, bei dem Granulat an einer Formwand aufgeschmolzen und anschließend als Fertigteil entformt wird.

Neben Polyurethan- Polypropylen- oder Polystyrolschäumen können zur Herstellung des Abschottungskörpers auch weitere Werkstoffe eingesetzt werden. Dies kann zum einen ein üblicher Kunststoff sein, wobei der Abschottungskörper dabei entweder als Spritzgußteil aus einem thermoplastischen Material oder auch als Pressteil aus vernetzten Formmassen hergestellt sein kann. Einem Polymerwerkstoff kann zur Realisierung einer besseren Schlagzähigkeit Natur- oder Kunstgummi beigemischt sein, ein geeigneter Werkstoff hierfür ist zum Beispiel Acrylnitrilbutadienstyrol (ABS), während eine vernetzte, duroplastische Formmasse durch eingeschlossene Fasern verstärkt und im sogenannten SMC-Verfahren hergestellt sein kann.

Anstelle der Kunststoffwerkstoffe können auch metallische Werkstoffe eingesetzt werden. Insbesondere hinsichtlich der einfacheren Entsorgung des Abschottungskörpers im Rahmen einer späteren Verschrottung des Fahrzeugs können geschäumte Metallwerkstoffe, beispielsweise aufgeschäumtes Aluminium verwendet werden. In diesem Fall erübrigt sich bei der Verschrottung des Fahrzeugs die Demontage des Abschottungskörpers, was insbesondere dann vorteilhaft ist, wenn dieser in einem schwer zugänglichen, weil beispielsweise im Rahmen der Fertigung durch Punktschweißen abgeschlossenen Karosseriehohlraum angeordnet ist.

Der Ansaugraum des Abschottungskörperes kann so ausgestaltet sein, daß eventuell doch eindringendes Wasser, das beispielsweise auch im Rahmen der Kondensation des Wassergehaltes der angesaugten feuchten Umgebungsluft in flüssiger Form vorliegen kann, nicht in die Rohluftleitung gerät, sondern sich vielmehr in einem vertieften Bereich des Ansaugraumes ansammelt und von dort über eine entsprechende Abflußleitung oder sonstige Abflußmöglichkeit abgeführt werden kann.

Weitere Merkmale und Vorteile der Erfindung ergeben sich aus den Unteransprüchen und aus der nachfolgenden Beschreibung eines bevorzugten Ausführungsbeispiels anhand der Zeichnungen.

In den Zeichnungen zeigt:
- Fig. 1: den Vorderwagen eines Kraftfahrzeuges mit eingebautem Abschottungskörper,
- Fig. 2: den in dem Kotflügel des Kraftfahrzeugs aus Figur 1 eingebauten Abschottungskörper und
- Fig. 3: in ausgebautem Zustand den Abschottungskörper aus Figur 2.

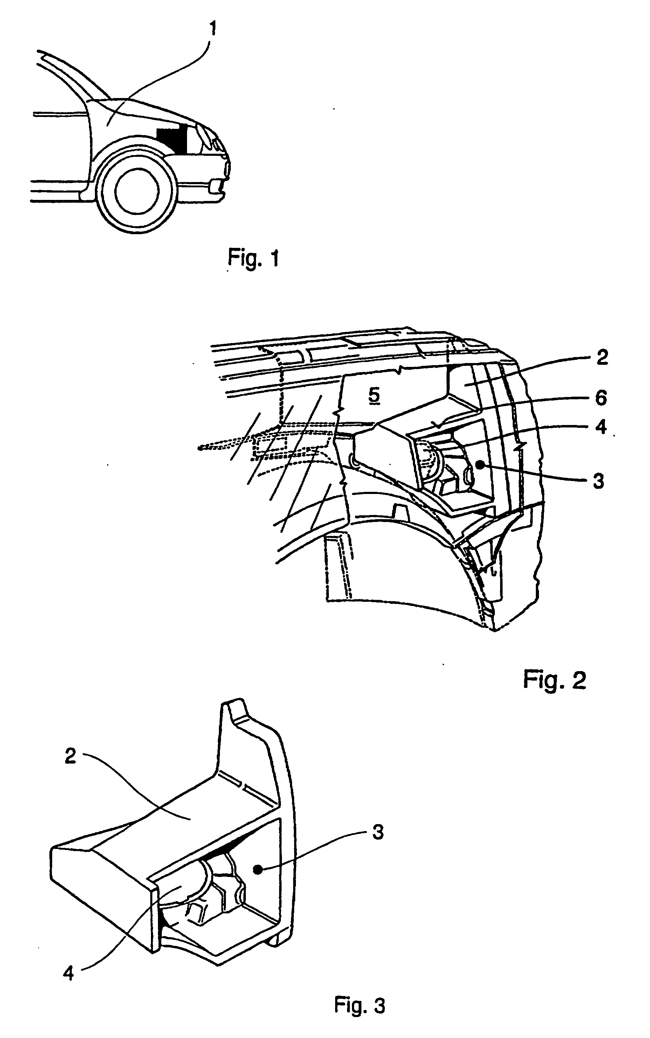

In Fig. 1 ist der Vorderwagen eines Kraftfahrzeuges dargestellt, in dessen Kotflügel der hier geschwärzt dargestellte Abschottungskörper eingebaut ist.

Der Kotflügel mit dem eingebauten Abschottungskörper ist in einer vergrößerten Detailansicht in Figur 2 wiedergegeben. Von dem Innenkotflügel, dem Außenkotflügel und der Radhausschale wird der Karosseriehohlraum 5 umschlossen, in dem der Abschottungskörper angeordnet ist. Das Gehäuse 2 des Abschottungskörpers ist so geformt, daß der Abschottungskörper an den Flächen des Innen-, des Außenkotflügels und der Radhausschale anliegt. Die dem Betrachter zugewandte Seite des Gehäuses 2 ist offen ausgebildet, so daß die Begrenzung des Abschottungskörper hier von der (in Figur 2 weggeschnittenen) Wandung des Außenkotflügels gebildet ist.

An der oberen Berührungslinie zwischen Außenkotflügel und Gehäuse 2 ist eine Ansaugöffnung 6 ausgebildet, die hier von einem Einschnitt der oberen Decke des Gehäuses gebildet ist, durch den zur Bildung der Ansaugöffnung 6 zwischen dem eingebauten Gehäuse 2 und der Wandung des Außenkotflügels ein Spalt verbleibt. Die Ansaugöffnung ist an der Oberseite des Gehäuses 2 angeordnet, wodurch eindringender Schmutz oder eindringendes Spritzwasser, das insbesondere durch die Spalte der Radhausschale eindringen kann, der Ansaugöffnung 6 ferngehalten wird.

Das Gehäuse 2 ist aus einem geschäumten Kunststoff hergestellt, der zum einen eine kostengünstige Herstellung des mechanisch wenig belasteten Abschottungskörpers ermöglicht und zum anderen möglicherweise austretendes Geräusch des Motors dämmt. Das vorzugsweise als Vollschaumteil ausgebildete Gehäuse 2 wirkt in der Weise entkoppelnd, daß Schwingungen einer häufig auch Ansaugschnorchel genannten Rohluftleitung 4 nicht als Körperschall auf die Fahrzeugkarosserie übertragen werden. Neben den günstigen akustischen Eigenschaften hat ein geschäumter Kunststoff den weiteren Vorteil, daß er nur sehr geringes zusätzliches Gewicht verursacht und kostengünstig auch in komplexen Geometrien herstellbar ist.

Über die Rohluftleitung 4 ist der vom dem Gehäuse 2 umschlossene Ansaugraum 3 mit der Gemischaufbereitung des Verbrennungsmotors verbunden. Der Anschluß der Rohluftleitung 4 an das Gehäuse 2 ist so gestaltet, daß eventuell trotz der erfindungsgemäßen Konstruktion eindringendes Wasser im Ansaugraum 3 verbleibt und nicht in die Gemischaufbereitung gelangt. Erreicht wird also ein effektiver Schutz gegen Wasserschlag. Das Gehäuse 2 des Abschottungskörpers füllt den Karosseriehohlraum 5 im Kotflügel nur teilweise aus. Durch Spalte und Ritzen, die beispielsweise zwischen dem Außenkotflügel und der Radhausschale angeordnet sind, kann Umgebungsluft in den Karosseriehohlraum 5 nachgeführt bzw. eingesogen werden. Der Festsitz in dem Karosseriehohlraum 5 wird durch Klemmung gegen Teile der Wandungen des, Karosseriehohlraums 5 erreicht. Für diese Art der Halterung werden vorteilhafter Weise keine zusätzlichen Befestigungselemente benötigt. Neben einer Verringerung des Bauteileanzahl ergibt sich dadurch auch eine Montagevereinfachung.

Die so nachgeführte Umgebungsluft ist nicht durch die Abwärme des Motors oder des Abgasstrangs erwärmt, so daß eine ungleichförmige Befüllung der Brennräume durch schwankende spezifische Volumen des Verbrennungsluft vermieden wird. Zur Anfettung des Gemischs im Kaltstartbetrieb oder bei kalten Außentemperaturen wird bei herkömmlichen Kraftfahrzeugen der Verbrennungsluftstrom nicht über den Abschottungskörper für Kaltluft angesaugt sondern über einen zweiten Ansaugkanal, der über die Abwärme beispielsweise des Abgaskrümmers vorgewärmt wird. Dieser zweite Ansaugkanal kann entfallen, wenn der erfindungsgemäße Abschottungskörper mit einer zusätzlichen Heizvorrichtung versehen ist, die die angesaugte Luft zu erwärmen vermag.

In Figur 3 ist der Abschottungskörper aus Figur 2 in einer Detailansicht dargestellt. Der vordere Bereich der Wandung des Gehäuses 2 ist so geformt, daß er reproduzierbar in den vorderen Bereich des Kotflügelinnenraums einsetzbar ist. Durch die an die Geometrie des Kotflügels bzw. der Radhausschale angepaßte Form wird die Möglichkeit eines falschen Einbaus bereits konstruktiv ausgeschlossen. Hierzu weist die vordere Wandung im hinteren Bereich eine Nase auf, die in eine korespondierende Vertiefung in dem vorderen oberen Längsträger eingreift. Durch diese Nase und die abgerundete Anlagefläche an der unteren Gehäuseseite für die Anlage an der Radhausschale kann eine Falschmontage sicher ausgeschlossen werden.

Ein weiterer Vorteil dieser paßgenauen Gestaltung des Gehäuses 2 liegt in der zusätzlichen Stabilität, die der Abschottungskörper dem Kotflügel verleiht. Die Eintrittsöffnung der Rohluftleitung ist leicht erhöht relativ zum Bodenbereich des Gehäuses 2 angeordnet, so daß ein Einlaufen von Kondenswasser, daß durch die Kondensation der Wasseranteile der angesaugten feuchten Umgebungsluft entstehen kann, in die Rohluftleitung 4 vermieden wird. Der erfindungsgemäße Abschottungskörper kann wie oben beschrieben im Kotflügel eines Kraftfahrzeuges angeordnet sein. Er kann jedoch auch in anderen Karosserieteilen positioniert werden, solange diese in einem ausreichenden Abstand zum Motor bzw. der Gemischaufbereitung angeordnet sind.

### BEZUGSZEICHENLISTE

- 1: Fahrzeug
- 2: Gehäuse des Abschottungskörpers
- 3: Ansaugraum
- 4: Rohluftleitung
- 5: Karosseriehohlraum
- 6: Ansaugöffnung

## Patentansprüche

1. Fahrzeugkarosserie mit einem Kotflügel, der mit einem Innen- und einem Außenkotflügel einen Karosseriehohlraum (5) begrenzt, in dem ein Abschottungskörper für die Verbrennungsluft eines Verbrennungsmotors angeordnet ist mit einem von der Abschottungskörperwandung gebildeten Gehäuse (2), das einen Ansaugraum (3) für im wesentlichen nicht erwärmte und vom Fahrtwind unbeeinflusste Umgebungsluft aufnimmt, dem im Gehäuse (2) eine Ansaugöffnung (6) für diese Umgebungluft zugeordnet ist und der über eine mit dem Gehäuse (2) verbunderen Rohluftleitung (4) mit einer Gemischaufbereitung verbindbar ist, wobei das Gehäuse (2) am Innenund Außenkotflügel anliegt, **dadurch gekennzeichnet, dass** das Gehäuse (2) an seiner dem Motorraum abgekehrten Seite offen aufgebildet und dort vom Außenkotflügel abgedeckt ist unter Bildung der im Übergangsbereich zwischen Außenkotflügel und Oberseite des Gehäuses (2) liegenden schlitzförmigen Ansaugöffnung (6), die in den Karosseriehohlraum (5) mündet sowie derart angeordnet ist, dass sie relativ zur Strömungsrichtung der über Spalte im Kotflügel in den Karosseriehohlraum (5) einströmenden Umgebungsluft in einem Windschatten liegt so dass in den Karosseriehohlraum (5) eingedrungene Schmutzpartikel sowie Spritzwasser nicht angesaugt werden.

2. Abschottungskörper nach Anspruch 1, **dadurch gekennzeichnet, dass** das Gehäuse (2) aus einem aufgeschäumten Kunststoff, insbesondere Polyurethan, Polypropylen oder Polystyrol hergestellt ist.

3. Fahrzeugkarosserie nach Anspruch 2, **dadurch gekennzeichnet, dass** das geschäumte Material ein Raumgewicht zwischen 20 g/l und 40 g/l aufweist.

4. Fahrzeugkarosserie nach wenigstens einem der vorstehenden Ansprüche, **dadurch gekennzeichnet, dass** das Gehäuse (2) aus einem geschäumten Material mit integraler Dichteveiteilung hergestellt ist, wobei die Dichte des Materials im Bereich der nach außen gerichteten Flächen des Abschottungskörpers im wesentlichen der Dichte eines nicht geschäumten Materials entspricht und die Dichte in Richtung der nach innen gerichteten Flächen bis zur Dichte eines geschäumten Materials abnimmt.

5. Fahrzeugkarosserie nach Anspruch 1, **dadurch gekennzeichnet, dass** der Abschottungskörper aus einem aufgeschäumten metallischen Werkstoff, insbesondere einem geschäumten Aluminiumwerkstoff, hergestellt ist.

6. Fahrzeugkarosserie nach Anspruch 1, **dadurch gekennzeichnet, dass** der Abschottungskörper aus Kunststoff, insbesondere aus einem thermoplastischen oder duroplastischen Kunststoff, hergestellt ist, wobei der Kunststoff einen Naturoder Kunstgummianteil enthalten kann.

7. Fahrzeugkarosserie nach wenigstens einem der vorstehenden Ansprüche, **dadurch gekennzeichnet, dass** der Ansaugraum (3) zum Ableiten eindringender Flüssigkeiten oder ähnlichem einen Fremdstoffauslaß aufweist.

8. Fahrzeugkarosserie nach wenigstens einem der vorstehenden Ansprüche, **dadurch gekennzeichnet, dass** die Ansaugöffnung (6) schlitzartig ausgebildet und an einer der Rohluftleitung (4) abgewandten Stelle des Ansaugraumes (3) angeordnet ist.

9. Fahrzeugkarosserie nach wenigstens einem der vorstehenden Ansprüche, **dadurch gekennzeichnet, dass** die Ansaugöffnung (6) mit einer Labyrinth-Dichtung zum Abhalten von Fremdkörpern oder Flüssigkeiten versehen ist.

10. Fahrzeugkarosserie nach wenigstens einem der vorstehenden Ansprüche, **dadurch gekennzeichnet, dass** der Abschottungskörper eine Heizvorrichtung aufweist, über die die angesaugte Umgebungsluft erwärmbar ist.

11. Fahrzeugkarosserie nach wenigstens einem der vorstehenden Ansprüche, **dadurch gekennzeichnet, dass** das Gehäuse (2) zumindest ein Mittel zur eindeutigen Bestimmung der Einbaulage aufweist, das mit einer korrespondierenden Fläche der Karosseriehohlraumes (5) zusammenwirkt, so dass der Abschottungskörper in nur einer Lage an einer definierten Stelle in den Karosseriehohlraum (5) einsetzbar ist.

## Claims

1. Vehicle body having a wing which delimits, by means of an inner and an outer wing, a body cavity (5) in which a partition body for the combustion air of an internal combustion engine is arranged, and having a housing (2) which is formed by the partition-body wall and contains a suction space (3) for essentially unheated ambient air which is not influenced by the head wind, the suction space being assigned a suction opening (6) for this ambient air in the housing (2) and being connectable to a mixture-preparing means via an untreated-air line (4) which is connected to the housing (2), the housing (2) resting on the inner and outer wings, **characterized in that** the housing (2) is designed to be open on its side facing away from the engine compartment and is covered there by the outer wing with the slot-shaped suction opening (6) being formed, the said suction opening being situated in the transition region between the outer wing and upper side of the housing (2), leading into the body cavity (5) and being arranged in such a manner that it lies in a slipstream relative to the direction of flow of the ambient air flowing into the body cavity (5) via gaps in the wing, with the result that particles of dirt and spray water which have penetrated into the body cavity (5) are not sucked in.

2. Partition body according to Claim 1, **characterized in that** the housing (2) is produced from a foamed plastic, in particular polyurethane, polypropylene or polystyrene.

3. Vehicle body according to Claim 2, **characterized in that** the foamed material has a volumetric weight of between 20 g/l and 40 g/l.

4. Vehicle body according to at least one of the preceding claims, **characterized in that** the housing (2) is produced from a foamed material having an integral distribution of density, the density of the material in the region of the outwardly directed surfaces of the partition body essentially corresponding to the density of a non-foamed material, and the density in the direction of the inwardly directed surfaces decreasing to the density of a foamed material.

5. Vehicle body according to Claim 1, **characterized in that** the partition body is produced from a foamed, metallic material, in particular a foamed aluminium material.

6. Vehicle body according to Claim 1, **characterized in that** the partition body is produced from plastic, in particular from a thermoplastic or duroplastic, it being possible for the plastic to contain a portion of natural or synthetic rubber.

7. Vehicle body according to at least one of the preceding claims, **characterized in that** the suction space (3) has a foreign-substance outlet for conducting away liquids or the like which have penetrated.

8. Vehicle body according to at least one of the preceding claims, **characterized in that** the suction opening (6) is of slot-like design and is arranged at a point of the suction space (3) that faces away from the untreated-air line (4).

9. Vehicle body according to at least one of the preceding claims, **characterized in that** the suction opening (6) is provided with a labyrinth seal to keep out foreign bodies or liquids.

10. Vehicle body according to at least one of the preceding claims, **characterized in that** the partition body has a heating device via which the ambient air which has been sucked in can be heated.

11. Vehicle body according to at least one of the preceding claims, **characterized in that** the housing (2) has at least one means for unambiguously determining the installation position, the said means interacting with a corresponding surface of the body cavity (5), so that the partition body can be inserted in just one position at a defined point into the body cavity (5)

## Revendications

1. Carrosserie de véhicule avec un garde-boue délimitant un espace creux de carrosserie (5) avec un garde-boue intérieur et un garde-boue extérieur, dans lequel espace creux est aménagé un corps de cloisonnement pour l'air de combustion d'un moteur à combustion interne avec un boîtier (2) formé par la paroi du corps de cloisonnement, lequel boîtier accueille un espace d'aspiration (3) pour de l'air ambiant essentiellement non chauffé et non influencé par le vent relatif, auquel est associé dans le boîtier (2) un orifice d'aspiration (6) pour cet air ambiant et lequel peut être mis en liaison avec une préparation d'un mélange via une conduite d'air brut (4) en liaison avec le boîtier (2), moyennant quoi le boîtier (2) repose contre le garde-boue intérieur et le garde-boue extérieur, **caractérisée en ce que** le boîtier (2) est conçu de manière ouverte sur son côté opposé à l'espace du moteur et y est recouvert par le garde-boue extérieur en formant l'orifice d'aspiration (6) en forme de fente situé dans la zone de transition entre le garde-boue extérieur et le côté supérieur du boîtier (2), lequel orifice débouche dans l'espace creux de carrosserie (5) et est disposé de manière à ce qu'il se situe à l'abri du vent par rapport à la direction de circulation de l'air ambiant affluant dans l'espace creux de carrosserie (5) via des fentes dans le garde-boue, de sorte que des particules de salissures et de l'eau projetée ayant pénétrés dans l'espace creux de carrosserie (5) ne sont pas aspirés.

2. Corps de cloisonnement selon la revendication 1, **caractérisé en ce que** le boîtier (2) est fabriqué à partir d'une matière synthétique expansée, en particulier du polyuréthane, du polypropylène ou du polystyrol.

3. Carrosserie de véhicule selon la revendication 2, **caractérisée en ce que** le matériau expansé présente un poids par unité de volume de 20 g/l à 40 g/l.

4. Carrosserie de véhicule selon l'une quelconque au moins des revendications précédentes, **caractérisée en ce que** le boîtier (2) est fabriqué à partir d'un matériau expansé avec une répartition intégrale de la masse volumique, moyennant quoi la masse volumique du matériau correspond pour l'essentiel à la masse volumique d'un matériau non expansé dans la zone des surfaces orientées vers l'extérieur du corps de cloisonnement, et moyennant quoi la masse volumique diminue en direction des surfaces orientées vers l'intérieur jusqu'à atteindre la masse volumique d'un matériau expansé.

5. Carrosserie de véhicule selon la revendication 1, **caractérisée en ce que** le corps de cloisonnement est fabriqué à partir d'un matériau métallique expansé, en particulier un matériau en aluminium expansé.

6. Carrosserie de véhicule selon la revendication 1, **caractérisée en ce que** le corps de cloisonnement est fabriqué à partir d'une matière synthétique, en particulier à partir d'une matière synthétique thermoplastique ou duroplastique, moyennant quoi la matière synthétique peut contenir une part de caoutchouc naturel ou synthétique.

7. Carrosserie de véhicule selon l'une quelconque au moins des revendications précédentes, **caractérisée en ce que** l'espace d'aspiration (3) présente un échappement pour les impuretés afin de rejeter les liquides ou similaires entrants.

8. Carrosserie de véhicule selon l'une quelconque au moins des revendications précédentes, **caractérisée en ce que** l'orifice d'aspiration (6) est conçu à la manière d'une fente et est aménagé en un emplacement opposé à la conduite d'air brut (4) de l'espace d'aspiration (3).

9. Carrosserie de véhicule selon l'une quelconque au moins des revendications précédentes, **caractérisée en ce que** l'orifice d'aspiration (6) est pourvu d'une garniture en labyrinthe pour retenir les corps étrangers ou les liquides.

10. Carrosserie de véhicule selon l'une quelconque au moins des revendications précédentes, **caractérisée en ce que** le corps de cloisonnement présente un dispositif de chauffage via lequel il est possible d'échauffer l'air ambiant aspiré.

11. Carrosserie de véhicule selon l'une quelconque au moins des revendications précédentes, **caractérisée en ce que** le boîtier (2) présente au moins un moyen pour la détermination claire de la position de montage, lequel coopère avec une surface correspondante de l'espace creux de carrosserie (5), de sorte que le corps de cloisonnement peut être placé seulement dans une position en un emplacement défini dans l'espace creux de carrosserie (5).
